# EUROPEAN PATENT APPLICATION

(11) **EP 4 738 124 A1**
(43) Date of publication of application: **06.05.2026**
(21) Application number: 24210938.7
(22) Date of filing: 05.11.2024
(51) Int. Cl.: G06F 11/10, G06N 3/00

(54) **SYNTHETIC DATA SIGNAL**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL); GARCIA MORCHON, Oscar, Eindhoven (NL); VAN ACHT, Victor Martinus Gerardus, Eindhoven (NL)
(74) Representative: Philips Intellectual Property & Standards

(57) **Abstract**

Proposed concepts thus aim to provide schemes, solutions, concepts, designs, methods and systems pertaining to generating a synthetic data signal. In particular, embodiments aim to provide a method for generating a synthetic data signal by first modifying a data signal (to be input into a trained generative network) by adding error-correction information to the data signal. The modified data signal (i.e., the data signal with the added error-correction information) is then input into the trained generative network to generate a synthetic data signal. The added error-correction information allows errors to be corrected during subsequent reconstruction of the data signal from the synthetic data signal.

## Description

### FIELD OF THE INVENTION

This invention relates to the field of generating synthetic data.

### BACKGROUND OF THE INVENTION

Bidirectional generative networks can be used for a variety of purposes, for example, to generate pictures from a command prompt, alter images, alter audio, etc. For example, a bidirectional generative network can create a synthetic output image based on latent space input pixels (which are noise-like) combined with a command prompt. If the latent input data is different, then for the same command prompt, the network will generate a different synthetic output image. Bidirectional generative networks can also be trained to recover the latent input data from the synthetic output image, i.e., bidirectional generative networks can be reversible.

Large amounts of effort and resources are being spent to improve bidirectional generative networks. Currently, state-of-the-art of bidirectional generative networks provide around 90% accuracy, and therefore lack full traceability and reversibility. In other words, when trying to recover the latent input data, 10% of the reconstructed latent input data is wrong. This is sufficient for some purposes, for example, deep fake technology, but not sufficient for more demanding applications such as those requiring fully traceable reconstruction. For example, fully traceable reconstruction is needed for medical image processing, denoising, super resolution, steganography, or encrypted steganography.

### SUMMARY OF THE INVENTION

The invention is defined by the claims.

According to examples in accordance with an aspect of the invention, there is provided a computer-implemented method for generating a synthetic data signal.

The method comprises: adding error-correction information to a data signal to generate a modified data signal; and inputting the modified data signal into a forward generator of a trained bidirectional generative network to generate a first synthetic data signal, wherein the forward generator is trained to generate a synthetic data signal based on an input data signal.

Proposed concepts thus aim to provide schemes, solutions, concepts, designs, methods and systems pertaining to generating a synthetic data signal. In particular, embodiments aim to provide a method for generating a synthetic data signal by first modifying a data signal (to be input into a trained generative network) by adding error-correction information to the data signal. The modified data signal (i.e., the data signal with the added error-correction information) is then input into the trained generative network to generate a synthetic data signal.

In other words, it is proposed that by adding error-correction information to a data signal to be input into a trained bidirectional generative network (e.g., adding error-correction information to latent space data), a synthetic data signal is generated with improved reversibility, such that a higher percentage (even 100%) of the original data signal can be reconstructed/recovered (e.g., using a backward generator of the trained bidirectional generative network). The added error-correction information allows errors to be corrected during subsequent reconstruction of the data signal from the synthetic data signal, for example, using an error-correction mechanism.

For example, error-correction code can be added to latent space data before it enters a generator of a bidirectional generative network (such as a BiGAN). This thus produces a synthetic data signal which, when input into a backwards path of the same bidirectional generative network, produces an output data signal whose errors are able to be corrected such that a higher percentage (up to 100%) of the original data signal can be reconstructed.

Also provided is a corresponding method for training a bidirectional generative network to facilitate this enhanced reversibility. For example, the training of the bidirectional generative network is modified (compared to traditional methods) in order to facilitate the bidirectional generative network being trained to enhance the correctability of any errors made during reconstruction of a data signal from a synthetic data signal.

Ultimately, an improved method for generating a synthetic data signal.

In some embodiments, the method may further comprise generating the error-correction information by processing the data signal with at least one of: a forward error correction polar algorithm; a Reed-Solomon algorithm; a Golay algorithm; a BCH algorithm; a multidimensional parity algorithm; a Hamming algorithm; and a convolutional algorithm. These may all be suitable algorithms for generating effective error-correction information to add to the data signal.

In some embodiments, the method may further comprise encrypting the data signal prior to adding the error-correction information. This may enhance the security of the reconstructable data within the synthetic data signal.

In some embodiments, adding the error-correction information to the data signal may comprise: structuring the encrypted data signal in a first domain; and adding error-correction information to the structured encrypted data signal to generate a modified data signal. This has been found to increase the performance of the generating of the synthetic data signal from an encrypted input (and of subsequently reconstructing the encrypted input from the synthetic data signal).

In some embodiments, the method may further comprise adding marking data to the modified data signal such that the first synthetic data signal comprises an indicator corresponding to the marking data. In this way, an indicator may be provided that can be used to indicate, for example, that the synthetic data signal is indeed synthetic, i.e., not real data, and/or its origin.

In some embodiments, the method may further comprise adding second error-correction information to the marking data to generate modified marking data, and wherein the modified marking data is added to the modified data signal such that the first synthetic data signal comprises an indicator corresponding to the marking data. In this way, the reconstructability of the marking data may be improved in the same way as with the data signal.

In some embodiments, the method may further comprise encrypting the marking data. In this way, the security of the marking data may be enhanced.

According to another aspect of the invention, there is provided a computer-implemented method for reconstructing a data signal. The method comprises: inputting a first synthetic data signal into a backward generator of a trained bidirectional generative network to generate a modified data signal, wherein the backward generator is trained to generate a data signal based on an input synthetic data signal; and processing the modified data signal with an error-correction mechanism to generate a predicted data signal; wherein the first synthetic data signal comprises additional information based on error-correction information, and wherein the predicted data signal is a prediction of the data signal.

In other words, the above method describes inputting the synthetic data signal (e.g., such as one generated in the methods for generating a synthetic data signal described above) into a backward generator of a trained bidirectional generative network (such as the backward generator of the trained bidirectional generative network which was used to generate the synthetic data signal). The synthetic data signal includes additional information based on error-correction information (e.g., the error-correction information which was added to the data signal before it was input into the forward generator of the bidirectional generative network resulting in the generation of the synthetic data signal). The output of the backward generator, i.e., the modified data signal, can thus be processed with an error-correction mechanism which utilizes the error-correction information (reconstructed from the additional information) in order to generate a predicted data signal which is a prediction of the original data signal (from which the synthetic data signal was first generated).

In some embodiments, the method may further comprise decrypting the predicted data signal to generate a decrypted predicted data signal. In this way, data signals which were encrypted before error-correction information was added to them may be decrypted, thus allowing retrieval of the original data signal.

In some embodiments, the synthetic data signal may comprise an indicator corresponding to marking data, and the method may further comprise extracting the indicator from the synthetic data signal and inputting the indicator into the backward generator to generate the marking data. In this way, marking data can be retrieved from the synthetic data signal.

In some embodiments, the synthetic data signal may comprise an indicator corresponding to marking data, and the method may further comprise: extracting the indicator from the synthetic data signal; inputting the indicator into the backward generator to generate modified marking data; and processing the modified marking data with a second error-correction mechanism to generate predicted marking data, wherein the predicted marking data is a prediction of the marking data. In this way, the marking data may be more reliably reconstructed.

According to another aspect of the invention, there is provided a computer-implemented method for training a bidirectional generative network, the method comprising: adding error-correction information to a training data signal to generate a first modified training data signal; inputting the first modified training data signal into a forward generator of a bidirectional generative network to generate a synthetic training data signal; inputting the synthetic training data signal into a backward generator of the bidirectional generative network to generate a second modified training data signal; processing the second modified training data signal with an error-correction mechanism to generate a predicted training data signal; determining an error-correction quality indicator based on error detection and correction levels of the error-correction mechanism during processing of the second modified training data signal; and further training the bidirectional generative network based on the determined error-correction quality indicator.

This method for training a bidirectional generative network thus provides an error-correction quality indicator which can be used to quantify how well the error-correction mechanism is working in conjunction with the bidirectional generative network's attempt at a reconstructed data signal, and thus this error-correction quality indicator can be fed back into the bidirectional generative network's training in order to improve its generation of data signals (from synthetic data signals) which can be reliably processed with an error-correction mechanism to produce a more accurate prediction of the original data signal.

In some embodiments, the error-correction quality indicator may comprise a score between 0% and 100%. This may be a particularly beneficial form for the error-correction quality indicator, allowing it to be a gradient indicator, indicating exactly how well the error-correction mechanism is working rather than a binary/step function which merely indicates whether the error-correctio mechanism fully corrected all errors or not. This may thus be particularly suitable for training the bidirectional generative network, allowing it to iteratively increase its performance by receiving linear feedback.

According to another aspect of the invention, there is provided a computer program comprising code means for implementing the method of any herein disclosed method when said program is run on a processing system.

According to another aspect of the invention, there is provided a system for generating a synthetic data signal. The system comprising a processor configured to: add error-correction information to a data signal to generate a modified data signal; and input the modified data signal into a forward generator of a trained bidirectional generative network to generate a first synthetic data signal, wherein the forward generator is trained to generate a synthetic data signal based on an input data signal.

Thus, there may be proposed concepts for generating a synthetic data signal, and this may be done adding error-correction information a data signal prior to inputting into the forward generator of a trained bidirectional generative network.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method for generating a synthetic data signal according to a proposed embodiment;
Fig. 2 is a flow diagram of a method for generating a synthetic data signal according to another proposed embodiment;
Fig. 3 is a flow diagram of a method for reconstructing a data signal according to a proposed embodiment;
Fig. 4 is a flow diagram of a method for reconstructing a data signal according to another proposed embodiment;
Fig. 5 is a flow diagram of a method for training a bidirectional generative network according to a proposed embodiment;
Fig. 6 is a simplified block diagram of a system for generating a synthetic data signal according to a proposed embodiment; and
Fig. 7 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to generating a synthetic data signal. According to proposed concepts, a number of possible solutions may be implemented separately or jointly. That is, although these possible solutions may be described below separately, two or more of these possible solutions may be implemented in one combination or another.

Embodiments of the invention aim to provide a method for generating a synthetic data signal. This can be achieved by first modifying a data signal (to be input into a trained generative network) by adding error-correction information to the data signal. The modified data signal (i.e., the data signal with the added error-correction information) is then input into the trained generative network to generate a synthetic data signal.

In other words, it is proposed that by adding error-correction information to a data signal to be input into a trained bidirectional generative network (e.g., adding error-correction information to latent space data), a synthetic data signal is generated with improved reversibility, such that a higher percentage (even 100%) of the original data signal can be reconstructed/recovered (e.g., using a backward generator of the trained bidirectional generative network). The added error-correction information allows errors to be corrected during subsequent reconstruction of the data signal from the synthetic data signal.

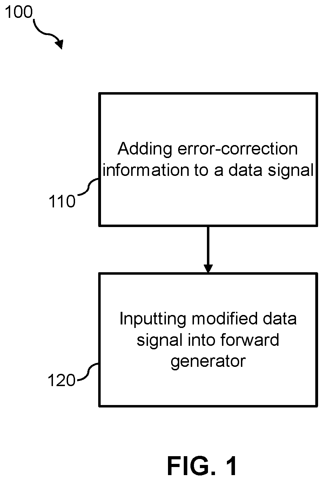

Referring now to Fig. 1, there is depicted a simplified flow diagram of a computer-implemented method 100 for generating a synthetic data signal according to a proposed embodiment.

The method 100 begins with the step 110 of adding error-correction information to a data signal to generate a modified data signal. The data signal can take many forms, as would be understood by the skilled person. In a non-limiting example, the data signal can comprise at least one of: latent space data; image data; video data; audio data; medical data; and latent space variants of image, video, audio, and/or medical data (i.e., image, video, audio, and/or medical data converted to latent space data). Likewise, as the skilled person would appreciate, the error-correction information can also take many suitable forms (e.g., depending on the exact type of error-correction mechanism which is desired to be used). In a non-limiting example, the error-correction information can comprise at least one of: multiple parity bits (e.g., a two-dimensional or multidimensional parity scheme); a checksum; a cyclic redundancy check; a Hamming code; a Reed-Solomon code; a Low-Density Parity-Check code; forward error correction information; a convolutional code; and a turbo code (such as those used in mobile communications). Error-correction information may also be referred to as error-correction codes. To be clear, the data signal is a data signal meant for / intended to be processed by the trained bidirectional generative network in order to generate a synthetic data signal and is not a training data signal intended for the bidirectional generative network to train on.

The method 100 also comprises step 120 of inputting the modified data signal into a forward generator of a trained bidirectional generative network to generate a first synthetic data signal, wherein the forward generator is trained to generate a synthetic data signal based on an input data signal. To be clear, the trained bidirectional generative network is a bidirectional generative network which has already been trained and is no longer in a training or learning phase when the modified data signal is input into it. Step 120 can thus be understood as inputting the modified data signal into a forward generator of a trained bidirectional generative network during a usage/inference phase (of the bidirectional generative network) to generate a first synthetic data signal.

For example, the forward generator can be trained to generate a synthetic data signal (e.g., a synthetic image) based on an input data signal (e.g., latent space data and/or a command prompt and/or an image). The forward generator is part of (e.g., the forward pass of) a trained bidirectional generative network. A trained bidirectional generative network is a sophisticated machine learning model capable of both encoding data into a latent representation and decoding from that latent space back to the original data domain. For example, an autoencoder (a type of bidirectional generative network) functions by first converting, for example, an input image to latent space, then generates a synthetic image based on the latent space representation of the input image. The generated synthetic image can then be generated back to latent space data and from that, back to the original input image (with up to 100% accuracy when error-correction according to the present invention is utilized). This bidirectional functionality allows the network to work in both directions, compressing input data into a lower-dimensional latent space and reconstructing or generating new data from this compressed representation. The network's generative capabilities enable it to produce novel data samples by sampling from the learned latent space. Through exposure to training data, the model learns to perform these encoding and decoding tasks effectively. There are many forms a bidirectional generative network can take. For example, in some embodiments, the trained bidirectional generative network can comprise at least one of: a trained bidirectional generative adversarial network (a trained BiGAN); and an autoencoder.

A synthetic data signal can be understood as artificially generated information that mimics the characteristics and statistical properties of real-world data without being an exact copy. For example, a synthetic data signal may be a synthetic photograph which mimics (i.e., looks like) a real-world photograph. As would be understood by the skilled person, synthetic data signals can represent various types of information, such as images, time series, text, or sensor readings, depending on the generative model's training data and architecture.

Thus, in an example of the invention, error-correction information/codes are added to a data signal prior to being processed by a forward pass of a BiGAN to facilitate increasing the accuracy of the BiGAN above the traditional roughly 90%. By doing so (and, for example, using a bidirectional generative network specifically trained to generate synthetic signals from which more error-correctable data signals can be reconstructed), it may be possible to reach 100% accuracy, i.e., a fully reversible bidirectional generative network.

For example, error correction enables decoding after regenerating/reconstructing the latent space code. Currently, AI algorithms are not perfect, and state of the art bidirectional GAN networks show a performance of 90%. This means, however, that the resulting (reconstructed) latent code has around a 10% error. It is therefore desired that this 10% error should be corrected in some way. Modern advanced error correction methods like FEC (forward error correction) polar code, and/or other block or convolutional codes can thus be used for this purpose.

There are many types of block codes. For example, Reed-Solomon coding is noteworthy for its use in compact discs, DVDs, QR codes, and hard disk drives. Other examples of classical block codes include Golay, BCH, Multidimensional parity, and Hamming codes.

For example, QR codes include error correction to allow for correcting potential errors due to dirty QR codes or potentially broken QR codes. Error correction is also what allow for placing a figure in the middle of a QR code (with the figure essentially being an error). A QR code uses a Reed-Solomon code which is a type of linear block code that can correct both erasures and errors. It works by essentially adding redundant symbols to the original message, such that the receiver can recover the message even if some symbols are corrupted or lost. There are multiple levels of redundancy which, of course, correspond to different desired levels of error correction capacity. For example, at level L, 7% of codewords can be restored, whereas at level H, 30% of codewords can be restored. Of course, the higher the level, the more robust the QR code is against noise and damage, but also, the larger the QR code size is and the lower the data density. The skilled person would appreciate how these insights could be correspondingly applied to the present invention, and the non-limiting example of a QR code is merely provided as an intuitive way to understand the process of error-correction when applied to a data signal.

To provide a more specific QR code-like example, for each error correction level, there are provided different numbers of codewords per block and a different number of error-correction codewords per block. A codeword is an 8-bit sequence which represents one character or symbol in the QR code. For example, for a QR code with a 21 by 21 matrix, at level L, there are 19 codewords per block and 7 error-correction codewords per block whereas at level H, there are only 9 codewords per block and 17 error-correction codewords per block. The Reed-Solomon codes use a polynomial algorithm to generate the error-correction codewords from the data codewords. The error correction codewords are then appended to the data codewords to form the final codeword sequence. The skilled person would appreciate how these insights could be correspondingly applied to the present invention, and the non-limiting example of a QR code is merely provided as an intuitive way to understand the process of error-correction when applied to a data signal.

Currently, QR codes are limited the 3KB of information for reasons relating to the ways they are used at the moment. Herein, the purpose is not to use the so-called QR code with a QR code reader. As the skilled person will appreciate, this limit is not relevant here and it is envisaged that what is referred to as a QR code herein need not conform to current standards and may contain much larger amounts of data.

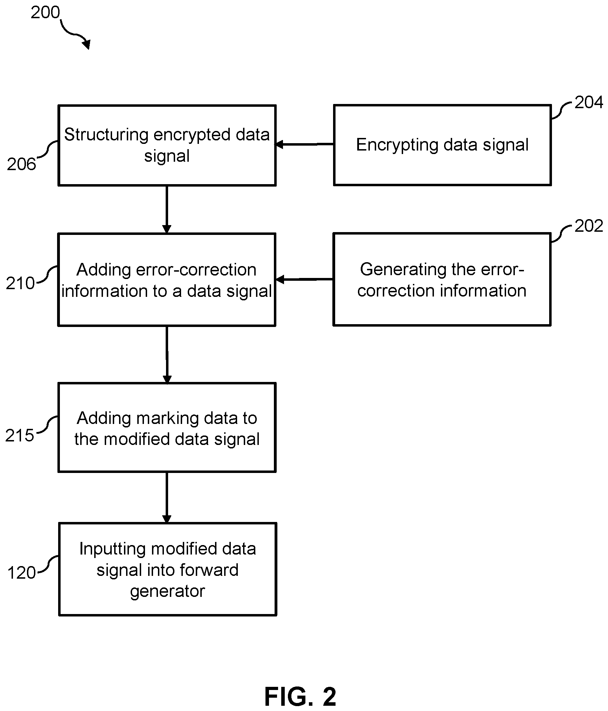

Referring now to Fig. 2, there is depicted a flow diagram of a computer-implemented method 200 for generating a synthetic data signal according to another proposed embodiment. Step 120 is substantially the same as step 120 described in relation to method 100 of Fig. 1.

Step 202 comprises generating the error-correction information (prior to adding said error-correction information to the data signal in step 210) by processing the data signal with at least one of: a forward error correction polar algorithm; a Reed-Solomon algorithm; a Golay algorithm; a BCH (Bose-Chaudhuri-Hocquenghem) algorithm; a multidimensional parity algorithm; a Hamming algorithm; and a convolutional algorithm. These may all be suitable algorithms for generating effective error-correction information to add to the data signal, but as the skilled person would understand, in other embodiments, other suitable methods of generating the error-correction information/codes can be used.

The above-described methods of generating error-correcting information would be known to the skilled person, but briefly, a forward error correction polar algorithm uses a recursive construction to achieve channel capacity for binary-input symmetric memoryless channels. Reed-Solomon algorithms are block-based error correctors that work well for burst errors, commonly used in storage systems and digital communications. Golay algorithms are perfect binary error-correcting codes capable of correcting multiple errors within a fixed block length. BCH (Bose-Chaudhuri-Hocquenghem) algorithms are cyclic error-correcting codes that can detect and correct multiple random error patterns. Multidimensional parity algorithms extend a simple parity check to two or more dimensions, allowing for error detection and sometimes correction in multiple directions. Hamming algorithms are linear error-correcting codes that can detect up to two simultaneous bit errors and correct single-bit errors. Convolutional algorithms use a sliding window approach to encode data, allowing for continuous error correction in streaming data applications.

It should be noted that in some embodiments, steps 202 and 210 can be performed simultaneously (i.e., in the same step) such that processing the data signal to generate the error-correction information also simultaneously adds said error-correction to the data signal.

Step 204 comprises encrypting the data signal prior to adding the error-correction information (in step 210). This enhances the security of the reconstructable data within the synthetic data signal (generated in step 120). For example, even if an unauthorized party were to reconstruct the original data signal which was input into the generative network from the synthetic data signal, they would then have to know how to decrypt the encrypted reconstructed data signal in order to obtain, for example, potentially sensitive data. The exact encryption method is not critical, and the many ways in which this could be done would be apparent to the skilled person. It should be noted that encrypted data resembles random noise / latent code which are input into generative networks, and thus are effectively and/or efficiently processed by generative networks.

It should be noted that in some embodiments, the error-correction information can also be encrypted (in the same way as the data signal) prior to being added to the data signal.

Step 206 comprises structuring the encrypted data signal in a first domain. This has been found to increase the performance of the generative network (and of subsequently reconstructing the encrypted input from the synthetic data signal). For example, the encrypted data signal (which resembles random noise) can be converted into structured data, i.e., can be structured in a first domain. For example, the encrypted data signal can be structured into a QR code - in this case, the first domain would be the visual, spatial domain of the QR code. Of course, as the skilled person would appreciate, in other embodiments, the encrypted data signal can be structured in any suitable way. In other words, by encrypting and structuring the data signal upfront (i.e., not as part of the processing by the generative network), the performance of the generative network has been found to be improved. Of course, as the skilled person would appreciate, in some embodiments, step 206 can be skipped - it is not an essential step even in embodiments where the data signal is encrypted, however, it is preferable.

In some embodiments, the order of steps may be adjusted such that the error-correction is added to the encrypted data signal first to generate a modified encrypted data signal, and then the modified encrypted data signal is structured to generate (a structured and encrypted) modified data signal. In other words, in some embodiments, step 210 may be performed before step 206 such that the encrypted data signal has error-correction information added to it and is then structured, with the structured modified data signal then being input into the forward generator.

In step 210, the error-correction information (generated in step 202) is added to the structured encrypted data signal to generate a modified data signal.

In step 215, marking data is added to the modified data signal such that the first synthetic data signal (generated in step 120) comprises an indicator corresponding to the marking data. In this way, an indicator can be provided to indicate, for example, that the synthetic data signal is indeed synthetic, i.e., not real data. In other embodiments, however, the indicator can be essentially meaningless, i.e., only functioning as a remnant of the marking data. Of course, as the skilled person would appreciate, in some embodiments this step can be skipped if marking data is not required or desired.

For example, the marking data may comprise a predetermined indicator which is known to indicate that at least some of the data in the synthetic data signal is synthetic. In some embodiments, such as this one, marking data can be added to the data signal before it is processed by a forward generator of a generative network, and therefore can only be reconstructed using a backward pass (essentially hiding it so that it is not readily visible in the synthetic data signal, i.e., with the indicator essentially being meaningless). To be clear, in all embodiments involving marking data, the marking data is not added to the synthetic data signal using a generator but instead is added as a pre-processing step - this has been found to enable different flexible markings/indicators without having to change/retrain the bidirectional generative network. For example, either or both of the marking data and the indicator may comprise at least one of: a metadata tag; a digital watermark; a cryptographic signature; and a data perturbation.

It should also be noted that in some embodiments, the marking data can be added to the data signal before it has been encrypted and/or structured and/or had the error-correction information added to it (i.e., before any of step 210, 206, or 204). This would still result in the generated first synthetic data signal comprising an indicator corresponding to the marking data.

In other words, there is essentially provided an additional method of securely marking processed data such that traceability of synthetic data is more effectively facilitated. For example, as more and more processing functions become available and used, traceability will become more and more of a challenge, and it will be harder to identify real original data vs processed enhanced data or even entirely synthetic (fake) data. Marking the synthetic data using marking data and/or some form of indicator can thus be used to enhance traceability of the synthetic data. As would be understood by the skilled person, in some embodiments, the marking data can also be encrypted, hidden, and/or have error-correction information added to it, etc., along with the data it is marking.

For example, in other embodiments, the method 200 may further comprise steps (not shown) of adding second error-correction information to the marking data to generate modified marking data, and wherein the modified marking data is added to the modified data signal such that the first synthetic data signal comprises an indicator corresponding to the marking data. In this way, the reconstructability of the marking data may be improved in the same way as with the data signal. In some embodiments, the method 200 may further comprise encrypting the marking data. In this way, the security of the marking data may be enhanced.

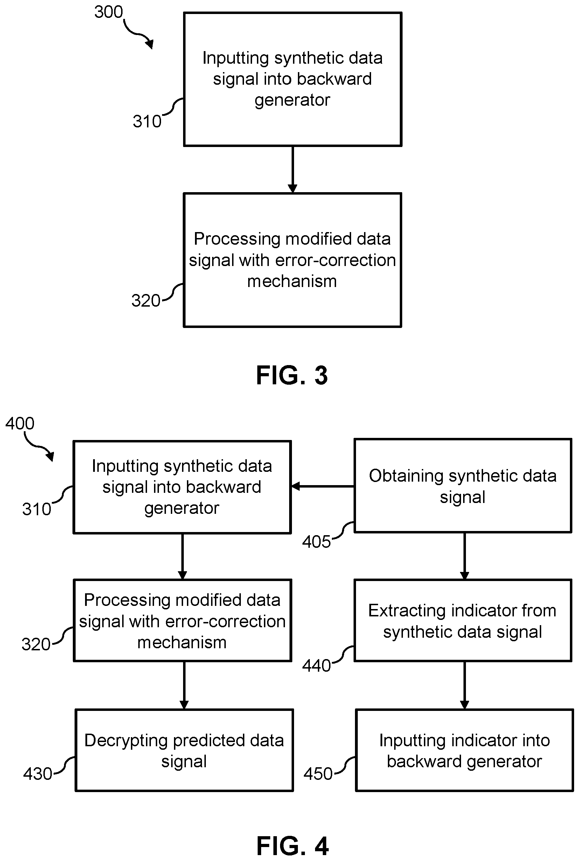

Referring now to Fig. 3, there is depicted a flow diagram of a computer-implemented method 300 for reconstructing a data signal (from a synthetic data signal) according to a proposed embodiment.

The method 300 begins with step 310 of inputting a first synthetic data signal into a backward generator of a trained bidirectional generative network to generate a modified data signal, wherein the backward generator is trained to generate a data signal based on an input synthetic data signal. The first synthetic data signal comprises additional information based on error-correction information (for example, which was added to an original data signal before being input into a forward generator of the bidirectional generative network resulting in the generation of the first synthetic data signal). To be clear, the trained bidirectional generative network is a bidirectional generative network which has already been trained and is no longer in a training or learning phase when the first synthetic data signal is input into it. Step 310 can thus be understood as inputting the first synthetic data signal into a backward generator of a trained bidirectional generative network during a usage/inference phase (of the bidirectional generative network) to generate a modified data signal.

For example, the backward generator can be trained to generate a data signal (e.g., a prediction of a data signal which was input into a forward generator of a trained bidirectional generative network) based on an input synthetic data signal (generated by a forward generator based on an input data signal). The backward generator is part of (e.g., the backward pass of) a trained bidirectional generative network. For example, in embodiments, where the trained bidirectional generative network is an autoencoder, the backward generator can be an encoder.

In step 320, the modified data signal is processed with an error-correction mechanism to generate a predicted data signal. It should be noted that after step 310, the additional information which was in the first synthetic data signal is essentially used to reconstruct the error-correction information on which the additional information was based. In other words, step 310 essentially comprises reconstructing a modified data signal including error-correction information based on a first synthetic data signal including additional information.

Of course, as the skilled person would understand, the error-correction mechanism could take many forms and what error-correction mechanism is used will be dependent on what type of error-correction information the additional information is based on (i.e., what type of error-correction information was added to the original data signal before being processed by a forward generator which resulted in the generation of the first synthetic data signal). For example, if the error-correction information was a two-dimensional parity scheme (rows and columns), then the error-correction mechanism could comprise: calculating parity bits for each row and column of a data matrix; when an error occurs, flagging it by both row and column parity checks; pinpointing the error's exact location; and correcting the error by flipping the identified erroneous bit. It would be clear to the skilled person, how other error-correction mechanisms could be implemented according to the nature of the error-correction information. What is inventive in the present disclosure is not the exact nature of the error-correction information and mechanisms but rather their implementation within the context of trained bidirectional generative networks, i.e., within the disclosed methods.

In other words, method 300 describes inputting the synthetic data signal (e.g., such as one generated in the methods for generating a synthetic data signal described above) into a backward generator of the trained bidirectional generative network (such as the backward generator of the trained bidirectional generative network which was used to generate the synthetic data signal). The synthetic data signal includes additional information based on error-correction information (e.g., the error-correction information which was added to the data signal before it was input into the forward generator of the bidirectional generative network resulting in the generation of the synthetic data signal). The output of the backward generator, i.e., the modified data signal, can thus be processed with an error-correction mechanism which utilizes the error-correction information (reconstructed from the additional information) in order to generate a predicted data signal which is a prediction of the original data signal (from which the synthetic data signal was generated).

In some embodiments, method 300 can be appended to the end of any herein-disclosed method for generating a synthetic data signal (e.g., method 100 or 200).

Referring now to Fig. 4, there is depicted a flow diagram of a computer-implemented method 400 for reconstructing a data signal according to another proposed embodiment. Steps 310 and 320 are substantially the same as steps 310 and 320 described in relation to method 300 of Fig. 3.

The method 400 begins with step 405 of obtaining a first synthetic data signal. The first synthetic data signal comprises additional information based on error-correction information, as described above in relation to method 300 of Fig. 3.

Step 430 comprises, subsequent to generating a predicted data signal (which is a prediction of the data signal being reconstructed), decrypting the predicted data signal to generate a decrypted predicted data signal. In this way, data signals which were encrypted before error-correction information was added to them and they were input into a forward generator may be decrypted, thus allowing retrieval of the original data signal. Of course, as the skilled person would understand, this step only makes sense if the data signal which was processed to generate the synthetic data signal was encrypted before the addition of the error-correction information. It should be noted that having a higher percentage accuracy (e.g., 100%) is what facilitates a reconstructed predicted data signal which is accurate enough to be reliably decrypted.

In this embodiment, the synthetic data signal also comprises an indicator corresponding to marking data (as discussed above in relation to method 200 of Fig. 2). In a separate stream of the method, step 440 thus comprises extracting the indicator from the synthetic data signal and step 450 comprises inputting the indicator into the backward generator (e.g., an encoder) to generate the marking data. In this way, marking data can be retrieved from the synthetic data signal. It should be noted that in some embodiments, the synthetic data signal without the indicator (i.e., after it has been extracted) can thus be input into the backward generator in step 310. It should also be noted that in some embodiments, step 440 may be skipped and step 450 and 310 may be performed together i.e., the entire synthetic data signal including the indicator is input into the backward generator together to generate both the modified data signal and the marking data simultaneously - in this case, step 440 (extracting the indicator) can be skipped.

In other embodiments, step 450 may be replaced with the following steps: inputting the indicator into the backward generator to generate modified marking data; and processing the modified marking data with a second error-correction mechanism to generate predicted marking data, wherein the predicted marking data is a prediction of the marking data. In this way, the marking data may be more reliably reconstructed. The second error-correction mechanism may be the same as the error-correction mechanism used to correct errors of the modified data signal or it may be different.

In some embodiments, method 400 can be appended to the end of any herein-disclosed method for generating a synthetic data signal (e.g., method 100 or 200).

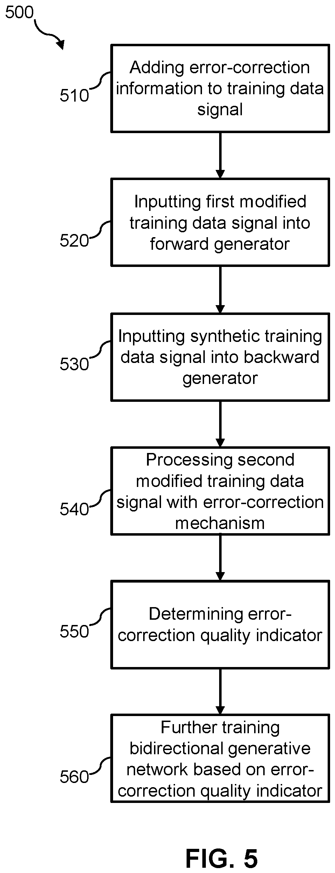

Referring now to Fig. 5, there is depicted a flow diagram of a computer-implemented method 500 for training a bidirectional generative network according to a proposed embodiment.

Step 510 comprises adding error-correction information to a training data signal to generate a first modified training data signal. In other words, step 510 is substantially the same as step 110 of method 100 of Fig. 1, however, with a training data signal instead. Of course, whatever type of error-correction information is added to the training data signal is the type of error-correction information/mechanism which the bidirectional generative network will be trained to be optimized for.

Step 520 comprises inputting the first modified training data signal into a forward generator (i.e., a forward pass) of a (not yet trained / still being trained) bidirectional generative network (such as a bidirectional generative adversarial network or an autoencoder) to generate a synthetic training data signal.

Step 530 comprises inputting the synthetic training data signal into a backward generator (i.e., a backward pass, and if the bidirectional generative network is an autoencoder, then an encoder) of the bidirectional generative network to generate a second modified training data signal. The second modified training data signal is essentially the bidirectional generative network's prediction of the first modified training data signal which was input into the bidirectional generative network in step 510.

Step 540 comprises processing the second modified training data signal with an error-correction mechanism to generate a predicted training data signal. This step is thus substantially the same as step 320 of method 300 of Fig. 3. As the skilled person would understand, the error-correction mechanism used should correspond to the error-correction information which was added in step 510.

Step 550 comprises determining an error-correction quality indicator based on error detection and correction levels of the error-correction mechanism during processing of the second modified training data signal. For example, the error-correction mechanism (or an external system) can essentially keep track of how many errors the error-correction mechanism, has detected and then how many of those it has been able to correct / not been able to correct (during processing of the second modified training data signal). An overall error-correction quality indicator can thus be generated based on this information (as the skilled person would understand, this could be done in many ways, for example, percentage of detected errors able to be corrected or simply the absolute number of errors detected, etc.). In some embodiments, the error-correction quality indicator can also indicate the locations of detected errors as well as error detection and correction levels of the error-correction mechanism during processing of the second modified training data signal.

For example, if the error-correction mechanism is a two-dimensional parity check mechanism then some errors are detectable and correctable (e.g., a single bit error per section / row-column combination) while other errors are detectable but not correctable (e.g., if there are multiple errors per section / row-column combination).

In this embodiment, the error-correction quality indicator specifically comprises a score between 0% and 100%. This is a particularly beneficial form for the error-correction quality indicator, allowing it to be a gradient/linear indicator, indicating exactly how well the error-correction mechanism is working rather than a binary/step function which merely indicates whether it corrected all errors or not. This may thus be particularly suitable for training the bidirectional generative network, allowing it to incrementally and iteratively increase its performance by receiving feedback. In other embodiments, however, this need not be the case, and any suitable form of error-correction quality indicator can be used, as would be understood by the skilled person, but preferably, a gradient/linear indicator allowing a range of different levels of success to be indicated rather than simply a binary fully-corrected or not indicator.

In other words, traditionally error-correction is judged as a step function from fail to 100% accurate (i.e., a binary indicator). However, the error-correction quality indicator being a gradient/linear function (e.g., from 0-100%) allows for iterative learning and training (indicating how close the error-correction is to correcting for all errors in the reconstructed data signal and thus helping the system (the generative network plus the error-correction mechanism) to gradually approach a 100% accurate prediction of the original data signal).

Step 560 comprises further training the bidirectional generative network based on the determined error-correction quality indicator. In this way, the bidirectional generative network can iteratively learn and increase its performance in reconstructing training data signals (i.e., generating second modified training data signals) which can be successfully corrected by the error-correction mechanism (aiming for 100% correction).

The skilled person would appreciate the many specific ways in which the bidirectional generative network could be further trained based on the determined error-correction quality indicator. For example, the error-correction quality indicator could be included in the loss function of the bidirectional generative network. Of course, the loss function could still include other traditional aspects for training, such as comparing the input and output of the bidirectional generative network (i.e., taking into account a level of similarity between the predicted training data signal and the (original) training data signal), etc.

The error-correction quality indicator is particularly useful for further training the backward generator/pass of the generative network as this is the pass which attempts to reconstruct the data signal, however, as the skilled person would appreciate, it can also be used to help further train the forward generator/pass or jointly train them together.

In other words, this method 500 for training a bidirectional generative network provides an error-correction quality indicator which can be used to quantify how well the error-correction mechanism is working in conjunction with the bidirectional generative network's attempt at a reconstructed data signal, and thus this error-correction quality indicator can be fed back into the bidirectional generative network's training in order to improve its generation of data signals (from synthetic data signals) which can be reliably processed with an error-correction mechanism to produce a more accurate prediction of the original data signal.

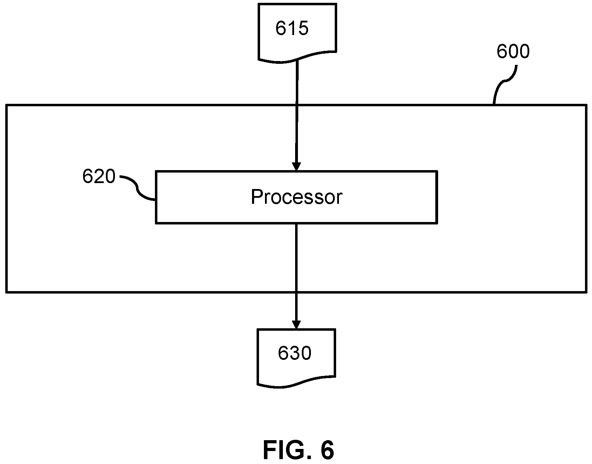

Referring now to Fig. 6, there is depicted a system 600 for generating a synthetic data signal according to a proposed embodiment. The system 600 comprises inputs 615, a processor 620, and outputs 630.

The input 615 comprises a data signal and error-correction information. The processor 620 is configured to perform the method of any herein-disclosed embodiment (e.g., such as method 100 or 200). For example, the processor 620 is configured to: add the error-correction information to the data signal to generate a modified data signal; and then input the modified data signal into a forward generator of a trained bidirectional generative network (which may or may not form part of the system 600 itself) to generate a first synthetic data signal, wherein the forward generator is trained to generate a synthetic data signal based on an input data signal. The output 630 thus comprises the first synthetic data signal.

In another embodiment, the system 600 can be for reconstructing a data signal. The inputs 615 would thus comprise a first synthetic data signal, the processor 620 would be configured to perform any herein-disclosed method for reconstructing a data signal (e.g., such as method 300 or 400) and the outputs 630 would comprise a predicted data signal (which is a prediction of the data signal being reconstructed).

In yet another embodiment, the system 600 can be for training a bidirectional generative network. The inputs 615 would thus comprise error-correction information and a training data signal, the processor 620would be configured to perform any herein-disclosed method for training a bidirectional generative network (e.g., such as method 500), and the outputs 630 would comprise a trained bidirectional generative network. It should be noted that the bidirectional generative network itself may or may not be part of the system 600 itself.

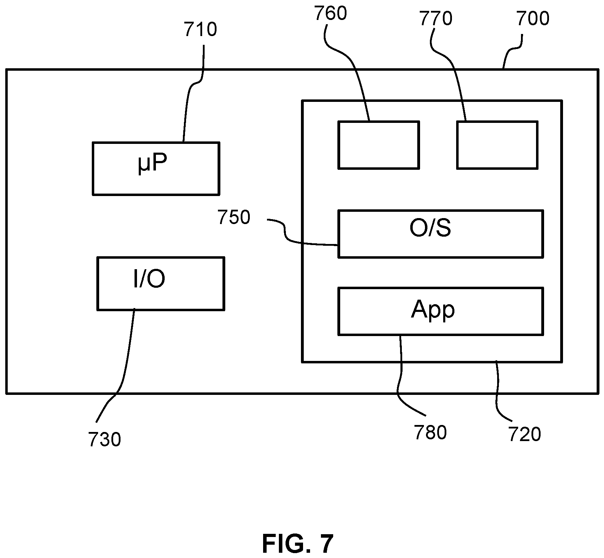

Fig. 7 illustrates an example of a computer 700 within which one or more parts of an embodiment may be employed. Various operations discussed above may utilize the capabilities of the computer 700. In this regard, it is to be understood that system functional blocks can run on a single computer or may be distributed over several computers and locations (e.g. connected via internet).

The computer 700 includes, but is not limited to, PCs, workstations, laptops, PDAs, palm devices, servers, storages, and the like. Generally, in terms of hardware architecture, the computer 700 may include one or more processors 710, memory 720 and one or more I/O devices 730 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 710 is a hardware device for executing software that can be stored in the memory 720. The processor 710 can be virtually any custom made or commercially available processor, a central processing unit (CPU), a digital signal processor (DSP), or an auxiliary processor among several processors associated with the computer 700, and the processor 710 may be a semiconductor based microprocessor (in the form of a microchip) or a microprocessor.

The memory 720 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 720 may incorporate electronic, magnetic, optical, and/or other types of storage media. Note that the memory 720 can have a distributed architecture, where various components are situated remote from one another, but can be accessed by the processor 710.

The software in the memory 720 may include one or more separate programs, each of which comprises an ordered listing of executable instructions for implementing logical functions. The software in the memory 720 includes a suitable operating system (O/S) 750, compiler 760, source code 770, and one or more applications 780 in accordance with exemplary embodiments. As illustrated, the application 780 comprises numerous functional components for implementing the features and operations of the exemplary embodiments. The application 780 of the computer 700 may represent various applications, computational units, logic, functional units, processes, operations, virtual entities, and/or modules in accordance with exemplary embodiments, but the application 780 is not meant to be a limitation.

The operating system 750 controls the execution of other computer programs, and provides scheduling, input-output control, file and data management, memory management, and communication control and related services. It is contemplated by the inventors that the application 780 for implementing exemplary embodiments may be applicable on all commercially available operating systems.

Application 780 may be a source program, executable program (object code), script, or any other entity comprising a set of instructions to be performed. When a source program, then the program is usually translated via a compiler (such as the compiler 760), assembler, interpreter, or the like, which may or may not be included within the memory 720, so as to operate properly in connection with the O/S 750. Furthermore, the application 780 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 730 may include input devices such as, for example but not limited to, a mouse, keyboard, scanner, microphone, camera, etc. Furthermore, the I/O devices 730 may also include output devices, for example but not limited to a printer, display, etc. Finally, the I/O devices 730 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 730 also include components for communicating over various networks, such as the Internet or intranet.

If the computer 700 is a PC, workstation, intelligent device or the like, the software in the memory 720 may further include a basic input output system (BIOS) (omitted for simplicity). The BIOS is a set of essential software routines that initialize and test hardware at start-up, start the O/S 750, and support the transfer of data among the hardware devices. The BIOS is stored in some type of read-only-memory, such as ROM, PROM, EPROM, EEPROM or the like, so that the BIOS can be executed when the computer 700 is activated.

When the computer 700 is in operation, the processor 710 is configured to execute software stored within the memory 720, to communicate data to and from the memory 720, and to generally control operations of the computer 700 pursuant to the software. The application 780 and the O/S 750 are read, in whole or in part, by the processor 710, perhaps buffered within the processor 710, and then executed.

When the application 780 is implemented in software it should be noted that the application 780 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 780 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-5, and the system of Fig. 6, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for generating a synthetic data signal, the method comprising:
adding error-correction information (110) to a data signal to generate a modified data signal; and
inputting the modified data signal into a forward generator of a trained bidirectional generative network (120) to generate a first synthetic data signal, wherein the forward generator is trained to generate a synthetic data signal based on an input data signal.

2. The computer-implemented method of claim 1, further comprising:
generating the error-correction information (202) by processing the data signal with at least one of: a forward error correction polar algorithm; a Reed-Solomon algorithm; a Golay algorithm; a BCH algorithm; a multidimensional parity algorithm; a Hamming algorithm; and a convolutional algorithm.

3. The computer-implemented method of claim 1 or 2, wherein the method further comprises encrypting the data signal (204) prior to adding the error-correction information.

4. The computer-implemented method of claim 3, wherein adding the error-correction information to the data signal comprises:
structuring the encrypted data signal (206) in a first domain; and
adding error-correction information to the structured encrypted data signal (210) to generate a modified data signal.

5. The computer-implemented method of any of claims 1 to 4, wherein the method further comprises adding marking data to the modified data signal (215) such that the first synthetic data signal comprises an indicator corresponding to the marking data.

6. The computer-implemented method of claim 5, wherein the method further comprises adding second error-correction information to the marking data to generate modified marking data, and wherein the modified marking data is added to the modified data signal such that the first synthetic data signal comprises an indicator corresponding to the marking data.

7. The computer-implemented method of claim 5 or 6, wherein the method further comprises encrypting the marking data.

8. A computer-implemented method (300) for reconstructing a data signal, the method comprising:
inputting a first synthetic data signal into a backward generator of a trained bidirectional generative network (310) to generate a modified data signal, wherein the backward generator is trained to generate a data signal based on an input synthetic data signal; and
processing the modified data signal with an error-correction mechanism (320) to generate a predicted data signal;
wherein the first synthetic data signal comprises additional information based on error-correction information, and wherein the predicted data signal is a prediction of the data signal.

9. The computer-implemented method of claim 8, wherein the method further comprises:
decrypting the predicted data signal (430) to generate a decrypted predicted data signal.

10. The computer-implemented method of claim 8 or 9, wherein the synthetic data signal comprises an indicator corresponding to marking data, and the method further comprises extracting the indicator from the synthetic data signal (440) and inputting the indicator into the backward generator (450) to generate the marking data.

11. The computer-implemented method of claim 8 or 9, wherein the synthetic data signal comprises an indicator corresponding to marking data, and the method further comprises:
extracting the indicator from the synthetic data signal;
inputting the indicator into the backward generator to generate modified marking data; and
processing the modified marking data with a second error-correction mechanism to generate predicted marking data, wherein the predicted marking data is a prediction of the marking data.

12. A computer-implemented method (500) for training a bidirectional generative network, the method comprising:
adding error-correction information to a training data signal (510) to generate a first modified training data signal;
inputting the first modified training data signal into a forward generator of a bidirectional generative network (520) to generate a synthetic training data signal;
inputting the synthetic training data signal into a backward generator of the bidirectional generative network (530) to generate a second modified training data signal;
processing the second modified training data signal with an error-correction mechanism (540) to generate a predicted training data signal;
determining an error-correction quality indicator (550) based on error detection and correction levels of the error-correction mechanism during processing of the second modified training data signal; and
further training the bidirectional generative network (560) based on the determined error-correction quality indicator.

13. The computer-implemented method of claim 12, wherein the error-correction quality indicator comprises a score between 0% and 100%.

14. A computer program comprising code means for implementing the computer-implemented method of any preceding claim when said program is run on a processing system.

15. A system (600) for generating a synthetic data signal, the system comprising:
a processor (620) configured to:
add error-correction information to a data signal to generate a modified data signal; and
input the modified data signal into a forward generator of a trained bidirectional generative network to generate a first synthetic data signal, wherein the forward generator is trained to generate a synthetic data signal based on an input data signal.
